# EUROPEAN PATENT APPLICATION

(11) **EP 4 415 437 A1**
(43) Date of publication of application: **14.08.2024**
(21) Application number: 23155561.6
(22) Date of filing: 08.02.2023
(51) Int. Cl.: H04W 56/00

(54) **RADIO ACCESS NETWORK COMPONENT AND METHOD FOR NOTIFYING A CORE NETWORK OF A COMMUNICATION SYSTEM ABOUT MOBILE TERMINALS NOTIFIED ABOUT CLOCK QUALITY INFORMATION**

(71) Applicant: NTT DOCOMO, INC., Tokyo 100-6150 (JP)
(72) Inventor: MUTIKAINEN, Jari, 80687 Munich (DE); SAMA, Malla Reddy, 80687 Munich (DE); MINOKUCHI, Atsushi, Tokyo, 100-6150 (JP)
(74) Representative: Viering, Jentschura & Partner mbB Patent- und Rechtsanwälte

(57) **Abstract**

According to one embodiment, a radio access network component is described including a receiver configured to receive an information from another component of the communication system, wherein the information indicates whether a notification about clock quality information has been sent to a mobile terminal and, if a notification about the clock quality information has been sent to the mobile terminal, an identification of the notification about clock quality information that was sent to the mobile terminal, a controller configured to determine whether the information indicates that a notification about the same clock quality information as a notification sent by the radio access network component was sent to the mobile terminal and a core network interface configured to, if the information does not indicate that a notification about the same clock quality information as a notification sent by the radio access network component was sent to the mobile terminal, notify a core network component of the communication system that a notification about clock quality information has been sent to the mobile terminal.

## Description

The present disclosure relates to radio access network components and methods for notifying a core network of a communication system about mobile terminals notified about clock quality information.

The mobile radio communication network side of a 5G communication system (5GS) may provide timing information for time-synchronization for a UE. This time-synchronization service provided by the network side for the UE may be impacted due to a defect in the clock source that provides the reference time to the radio access network. Accordingly, any clock defects on the radio access network side need to be handled. For this, in particular, mobile terminals are informed about clock quality information being available for retrieval in case the clock quality information has changed, e.g. due to a clock defect on the network side. Further, the core network is typically notified by the radio access network about which mobile terminals have already been informed in this manner. Approaches are desirable which allow keeping the signalling overhead for this mechanism low.

According to one embodiment, a radio access network component is provided including a receiver configured to receive an information from another component of the communication system, wherein the information indicates whether a notification about clock quality information has been sent to a mobile terminal and, if a notification about the clock quality information has been sent to the mobile terminal, an identification of the notification about clock quality information that was sent to the mobile terminal, a controller configured to determine whether the information indicates that a notification about the same clock quality information as a notification sent by the radio access network component was sent to the mobile terminal and a core network interface configured to, if the information does not indicate that a notification about the same clock quality information as a notification sent by the radio access network component was sent to the mobile terminal, notify a core network component of the communication system that a notification about clock quality information has been sent to the mobile terminal.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a mobile radio communication system.
- Figure 2: shows flow diagram of an example of a TSCTSF (Time Sensitive Communication and Time Synchronization Function) acquiring RAN (radio access network) clock status notifications by subscription a corresponding service provided by the AMF (Access and Mobility Management Function).
- Figure 3: shows a flow diagram of an example for a TSCTSF being notified about the RAN clock status of a RAN node.
- Figure 4: illustrates an exemplary scenario where a second UE (User Equipment), previously served by a second RAN node, moves into the service area of a first RAN node.
- Figure 5: illustrates an exemplary scenario where a second UE, previously served by a second node, moves into the service area of a first RAN node, wherein the second UE is in RRC-Inactive mode.
- Figure 6: illustrates an information flow for the approaches of figures 4 and 5.
- Figure 7: illustrates an information flow for an alternative approach.
- Figure 8: shows a radio access network component of a radio access network of a communication system according to an embodiment.
- Figure 9: shows a flow diagram illustrating a method for notifying a core network of a communication system about mobile terminals notified about clock quality information according to an embodiment.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

Various examples corresponding to aspects of this disclosure are described below:
Example 1 is a radio access network component of a radio access network of a communication system as described above.
Example 2 is the radio access network component of example 1, including a sender configured to send clock quality information notifications to mobile terminals served by the radio access network component, wherein the notification sent by the radio access network component is a notification sent by the sender.
Example 3 is the radio access network component of example 1 or 2, wherein the sender is configured to broadcast clock quality information notifications to mobile terminals served by the radio access network component.
Example 4 is the radio access network component of any one of examples 1 to 3, wherein the notification about clock quality information is a notification that clock quality information is ready to be retrieved from the radio access network by the mobile terminal.
Example 5 is the radio access network component of any one of examples 1 to 4, wherein the controller is configured to determine whether the information indicates that a notification with the same identification as a notification sent by the radio access network component was sent to the mobile terminal and the core network interface is configured to, if the information does not indicate that a notification with the same identification as a notification sent by the radio access network component was sent to the mobile terminal, notify the core network component of the communication system that a notification about clock quality information has been sent to the mobile terminal.
Example 6 is the radio access network component of any one of examples 1 to 5, wherein the core network interface is configured to, if the information does not indicate that a notification with the same identification as a notification sent by the radio access network component was sent to the mobile terminal, notify the core network component about the identification of the notification sent by the radio access network component to the mobile terminal.
Example 7 is the radio access network component of any one of examples 1 to 6, wherein the core network interface is configured to notify the core network component that a notification about clock quality information was sent to the mobile terminal by including the mobile terminal into a list, which the core network interface transmits to the core network component, of mobile terminals to which a notification about clock quality information has been sent.
Example 8 is the radio access network component of any one of examples 1 to 7, wherein the clock quality information is information that a clock of the radio access network component has a clock defect.
Example 9 is the radio access network component of any one of examples 1 to 8, wherein the receiver is configured to receive the information as part of information about the mobile terminal upon connection of the mobile terminal to the radio access network component or during an ongoing connection of the mobile terminal to the radio access network component.
Example 10 is the radio access network component of any one of examples 1 to 9, wherein the receiver is configured to receive the information as part of a mobile terminal context.
Example 11 is the radio access network component of any one of examples 1 to 10, wherein the mobile terminal is a mobile terminal served or to be served by the radio access network component.
Example 12 is the radio access network component of any one of examples 1 to 11, wherein the other component is the core network component.
Example 13 is the radio access network component of any one of examples 1 to 10, wherein the mobile terminal is a mobile terminal served or to be served by the radio access network component and wherein the other component is another radio access network component of the radio access network which has served the mobile terminal before the component starts or has started to serve the mobile terminal.
Example 14 is the radio access network component of any one of examples 1 to 13, wherein the core network component is an Access and Mobility Management Function.
Example 15 is the radio access network component of any one of examples 1 to 14, wherein the notification is a report identification.
Example 16 is the radio access network component of any one of examples 1 to 15, wherein the report identification is a report identification constructed from a scope of the clock quality information and an event identification.
Example 17 is a method for notifying a core network of a communication system about mobile terminals notified about clock quality information, including receiving, by a radio access component of the communication system, an information from another component of the communication system, wherein the information indicates whether a notification about clock quality information has been sent to a mobile terminal and, if a notification about the clock quality information has been sent to the mobile terminal, an identification of the notification about clock quality information that was sent to the mobile terminal, determining whether the information indicates that a notification about the same clock quality information as a notification sent by the radio access network component was sent to the mobile terminal and, if the information does not indicate that a notification about the same clock quality information as a notification sent by the radio access network component was sent to the mobile terminal, notifying a core network component of the communication system that a notification about clock quality information has been sent to the mobile terminal.

It should be noted that one or more of the features of any of the examples above may be combined with any one of the other examples. In particular, the Examples described in context of the device (i.e. RAN component) are analogously valid for the method.

According to further embodiments, a computer program and a computer readable medium including instructions, which, when executed by a computer, make the computer perform the method of any one of the above Examples are provided.

In the following, various examples will be described in more detail.

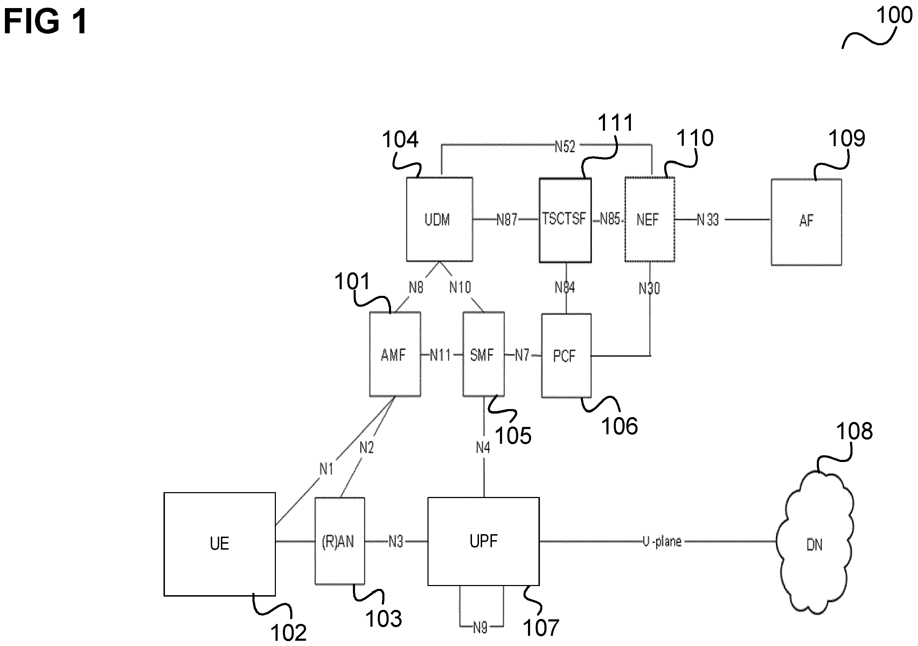

Figure 1 shows a mobile radio communication system 100, for example configured according to 5G (Fifth Generation) as specified by 3GPP (Third Generation Partnership Project) in simplified form.

The mobile radio communication system 100 includes a mobile radio terminal device 102 such as a UE (user equipment), and the like. The mobile radio terminal device 102, also referred to as subscriber terminal, forms the terminal side while the other components of the mobile radio communication system 100 described in the following are part of the mobile communication network side, i.e. part of a mobile communication network (e.g. a Public Land Mobile Network PLMN).

Furthermore, the mobile radio communication system 100 includes a Radio Access Network (RAN) 103, which may include a plurality of radio access network nodes, i.e. base stations configured to provide radio access in accordance with a 5G (Fifth Generation) radio access technology (5G New Radio). It should be noted that the mobile radio communication system 100 may also be configured in accordance with LTE (Long Term Evolution) or another mobile radio communication standard (e.g. non-3GPP accesses like WiFi) but 5G is herein used as an example. Each radio access network node may provide a radio communication with the mobile radio terminal device 102 over an air interface. It should be noted that the radio access network 103 may include any number of radio access network nodes.

The mobile radio communication system 100 further includes a core network (5GC) including an Access and Mobility Management Function (AMF) 101 connected to the RAN 103 and a Unified Data Management (UDM) 104. Here and in the following examples, the UDM 104 may further consist of the actual UE's subscription database, which is known as, for example, the UDR (Unified Data Repository). The core network further includes, for example, a PCF (Policy Control Function) 106 and an AF (application function) 109.

The core network further includes a Session Management Function (SMF) 105 and a User Plane Function (UPF) 107 connected to a data network 108. The SMF 105 is for handling PDU (Protocol Data Unit) sessions, i.e. for creating, updating and removing PDU sessions and managing session context with the User Plane Function (UPF) 107. The core network further includes a Network Exposure Function (NEF) 110 and a Time Sensitive Communication and Time Synchronization Function (TSCTSF) 111.

The RAN 103 and the core network form the network side of the mobile radio communication system, or, in other words, form the mobile radio communication network. The mobile radio communication network and the mobile terminals accessing the mobile radio communication network form, together, the mobile radio communication system.

The mobile radio communication network side of a 5G communication system (5GS) provides timing information for time-synchronization between the UE 102 and the RAN 103. This time-synchronization service provided by the network side for the UE 102 may be impacted due to a defect in the clock source that provides the reference time to the RAN 103 (e.g. in GNSS reception via which the RAN 103 receives timing information).

If the clock status of a RAN node degrades from the normal operation (as defined e.g. by a pre-configured threshold in the RAN 103), the RAN node broadcasts a reference report ID (also referred to as Report ID in the following) in SIB9 (System Information Block). This means that when the RAN node's network timing synchronization status exceeds the threshold, the NG-RAN includes in SIB9 a reference report ID. When the network timing synchronization status meets the thresholds again (i.e., status improvement), the RAN node stops broadcasting the reference report ID in SIB9. Either event serves as a notification for the UE 102 reading the SIB9 that there is new clock quality information available. The Report ID is constructed from a scope of the report (e.g. list of cells to which the clock quality information pertains) and an event ID. The event ID is a random scalar that is unique within the scope.

The UE in RRC _INACTIVE or RRC_IDLE state compares the reference report ID in SIB9 (or lack of reference report ID) with a locally stored reference report ID to determine if it has retrieved the last available clock quality information already.

A UE which is not connected (i.e. is in RRC_INACTIVE or RRC_IDLE state) receiving a Report ID (that it has not received before) reconnects to the network (e.g. via NAS mobility registration update) in case it has been is instructed to do so (by the AMF (via Registration or the UE Configuration Update procedure). After the UE 102 has reconnected to the network, the RAN 103 may use unicast RRC signalling for provision of the clock quality information to the UE 102.

The RAN 102 should also notify the AMF 101 (using N2 node level signalling) that the RAN clock status is not in normal operation (i.e. there is a clock defect) if that is the case. The RAN 102 includes information about the RAN clock status into the corresponding notification.

When the RAN clock status improves back to the normal operation, the RAN stops broadcasting the Report ID. The RAN 103 also notifies the AMF 101 (using N2 node level signalling) that the RAN clock status is back in the normal operation. A UE 102 receiving a lack of Report ID (while having received one before) reconnects to the network (e.g. via NAS mobility registration update).

The AMF 101 then further notifies a TSCTSF (Time Sensitive Communication and Time Synchronization Function) on RAN node-basis about that the RAN clock status has degraded or improved. The notification contains also information about the corresponding RAN clock status. After receiving this RAN clock status notification the TSCTSF determines the impacted UEs (i.e. UEs served by the impacted RAN node) in a separate procedure.

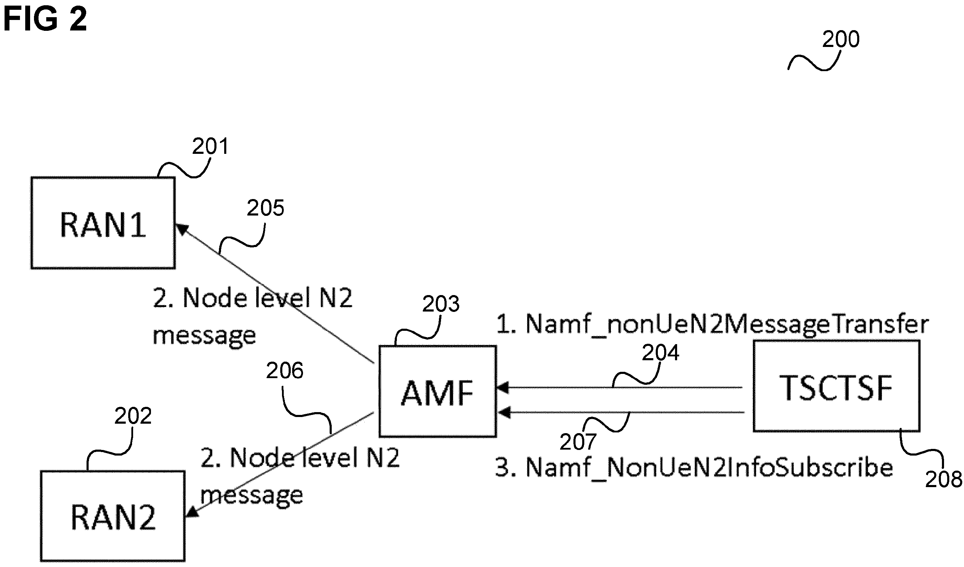

Figure 2 shows flow diagram 200 of an example of the TSCTSF acquiring RAN clock status notifications by subscription a corresponding service provided by the AMF.

A first RAN node 201, a second RAN node 202, an AMF 203 and a TSCTSF are involved in the flow.

In 204, a TSCTSF uses Namf_nonUEN2MessageTransfer service to instruct the AMF to configure the RAN nodes for RAN clock status notifications.

In 205 and 206, the AMF 203 configures the RAN nodes 201, 202 for the RAN clock status notifications (N2 node-level signalling, i.e. non-UE associated signalling in TS 38.413).

In 207, the TSCTSF 204 uses the Namf_NonUEInfoSubscribe service to subscribe for RAN clock status notifications from the AMF.

For example, when a UE reconnects to the network (in reaction to having received a Report ID or lack thereof), the respective RAN node 201, 202 gets aware of the UE identity. The RAN node 201, 202 may then collect the connected UEs and report them to the AMF 203 along with the RAN clock status notification (i.e. the notification about the RAN node's clock status). Thus, the TSCTSF 204 does not need to determine the UEs under an impacted RAN node in a separate procedure. As a possible optimization, depending on the user subscription, the RAN node 201, 202 could report the UE only if the RAN clock status criteria in the user subscription is exceeded. The criteria defines the condition whether the service level is accepted vs. not accepted for the user.

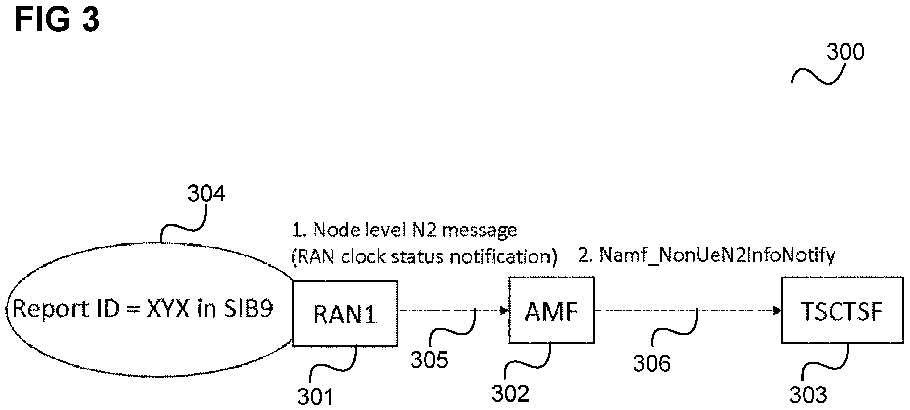

Figure 3 shows a flow diagram 300 of an example for a TSCTSF being notified about the RAN clock status of a RAN node.

A RAN node 301, an AMF 302 and a TSCTSF 303 are involved in the flow.

It is assumed that the clock degrades in the RAN node 301. Therefore, the RAN node 301 begins to broadcast a Report ID (as notification about clock quality information) 304 and, in 305, notifies the AMF 302 via N2 node-level message about RAN clock status notification with a notification (i.e. message) which contains information about the RAN node's clock status, and (as information about UEs which have been notified about the clock quality information) a list of UEs currently connected to the RAN node 301.

The information about the RAN clock status (RAN clock status notification) may for example include
- an indication of the RAN node's time source,
- information about the RAN node's clock traceability to UTC,
- a synchronization state of the RAN node,
- information about clock accuracy of the RAN node,
- information about frequency stability of the RAN node.

In 306, the AMF 302 uses the Namf_NonUEInfoNotify service to notify the TSCTSF 303 about the RAN clock status. As mentioned above, it may also include a list of UEs currently connected to the RAN node.

The RAN node 301 may implement a timer to wait that the UEs that notice the broadcasted Report ID reconnect to it. Once a UE reconnects the RAN node sets up a N2 connection with the AMF 302 and receives the UE context from the AMF 302. The RAN waits until the timer expires and reports all such reconnecting UEs at once to the AMF 302. Even after the timer expiry, more UEs may reconnect to the RAN node 301 (e.g. when moving in from another RAN node), so the RAN node 301 may need to report these UEs one-by-one to the AMF 302.

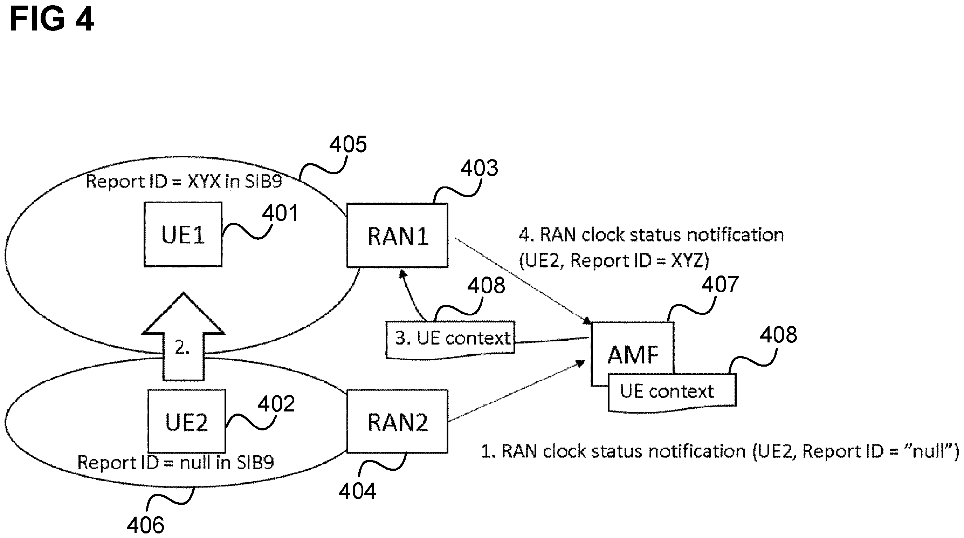

Figure 4 illustrates an exemplary scenario where a second UE 402, previously served by a second RAN node 404, moves into the service area 405 of a first RAN node 403.

The first RAN node 403 for example has reported a first UE 401 (which the first RAN node 403 serves) along with information about the first RAN node's RAN clock status to the respective AMF 407. After that the first UE 401 for example disconnects from the network, i.e. moves to RRC-Idle state. Later, the first UE 401 may connect again to the first RAN node 403, e.g. due to uplink or downlink data transmission. The first RAN node 403 should in this case not report the first UE 401 again for the RAN clock status (to avoid excessive signalling).

However, when the second UE 402 moves into the first RAN node's service area 405 from the service area 406 of the second RAN node 404 while in RRC-Idle state and then connects to the first RAN node 403, the first RAN node 403 should report the second UE 402 (assuming that the RAN, in particular the second RAN node 404, has not reported it yet for the same Report ID, e.g. because the second RAN node 404 does not have a clock defect).

So, the first RAN node 403 (when it is broadcasting a Report ID) needs to distinguish the two cases that a UE which it has already reported to the AMF 407 (as having received the Report ID) reconnects (first UE 401) and a UE which it has not yet reported to the AMF 407 newly connects (second UE 402). For this, however, the first RAN node 403 does not know whether a UE is reconnecting (and therefore should not be reported) or is moving in from another RAN node with a different Report ID or from a RAN node in normal operation (and therefore should be reported).

Similarly, if the first RAN node 403 is in normal operation (i.e. does not broadcast a Report ID) it needs to distinguish whether a UE that is connecting is moving in from a RAN node 404 that is in normal operation (and thus should not be reported) or is moving in from a RAN node 404 that is broadcasting a Report ID (and thus should be reported) or is reconnecting (and thus should not be reported) to the first RAN node 403.

To allow a RAN node, here the first RAN node 403, make such a distinction, the AMF 407 stores an indication "RAN clock status report received" in the UE context 408 of each UE. The indication includes a Report ID or a "null " (default) value if no status report ID has been received by the AMF 407 for this UE. The default value is "null".

The AMF 407 further stores, for each RAN node 403, 404, the information whether the RAN node has a clock defect.

When the AMF 407 receives a RAN clock status notification (and a Report ID) along with a list of connected UEs from a RAN node, in this example the first RAN node 403, the AMF 407 stores, for each UE for which it stores the UE context 408 (as usual according to 3GPP standard), an indication of "RAN clock status report received" with the Report ID into the UE context 408. The AMF 407 overwrites any existing value of Report ID in the UE context 408. When the UE 408, here the first UE 401, reconnects to the first RAN node 403 (e.g. due to reception of a Report ID in SIB9 from the first RAN node 403), the first RAN node 403 sets up an N2 connection with the AMF 407 and the AMF 407 uploads the UE context 408 to the RAN (as usual according to 3GPP standard). The first RAN node 403 includes the UE into the list of connected UEs to be sent with the RAN clock status notification (see 305 of figure 3) only if the Report ID in the indication of "RAN clock status report received" in the UE context 408 differs from the Report ID that the first RAN node 403 broadcasts.

If the first RAN node 403 does not broadcast a Report ID (i.e. has no clock defect) and the Report ID in the UE context 408 is "null", the first RAN node 403 does not include the UE into the list to be sent with the RAN clock status notification.

If, however, the first RAN node 403 does not broadcast a Report ID (i.e. has no clock defect) but receives a Report ID in the UE context 408 (other than "null"), the first RAN node 403 includes the UE into the list to be sent with the RAN clock status notification (which in this case indicates that there is no clock defect which impacts this UE).

The AMF 407 always updates the Report ID in the UE context 408 with the most recent Report ID received from the RAN (in particular with "null" in case that with the last RAN clock status notification it was indicated that there is no clock defect which impacts the UE).

For example, when the second UE 402 moves from the second RAN node 404 (assumed to be in normal clock operation) to the service area 405 of the first RAN node 401 that is broadcasting Report ID = XYZ, the first RAN node 401 receives a "null" from the AMF 406 in the UE context 408 for the second UE 402. The first RAN node 401 sends the information about UE2 with Report ID = XYZ with the clock status notification that it sends to the AMF 406 since the Report ID in the UE context differs from XYZ.

The above example relates to the behaviour in case that the first UE 401 and second UE 402 are in RRC-Idle mode while disconnected from the network.

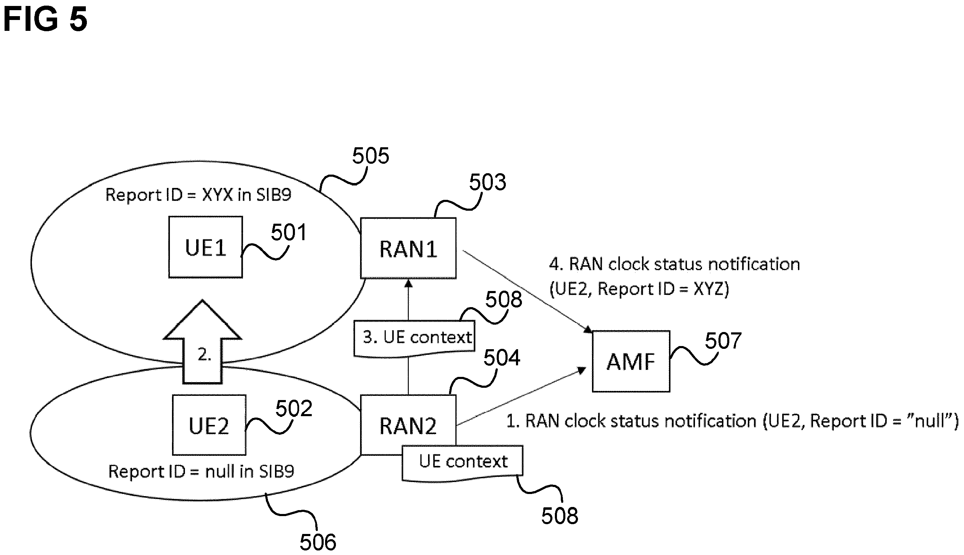

Figure 5 illustrates an exemplary scenario where a second UE 502, previously served by a second RAN node 504, moves into the service area 505 of a first RAN node 503, wherein the second UE 502 is in RRC-Inactive mode.

If the second UE 502 and the RAN implement RRC-Inactive mode, the last serving RAN node (here the second RAN node 504) stores the UE context 508 while the UE 502 is in RRC-Inactive state. As in the example of figure 4, it is assumed that the second UE 502 may move from the service area 506 of the second RAN node 504 into the service area 505 of another (here the first) RAN node 501 (while, in this example, being in RRC-Inactive state rather than in RRC-Idle state).

A similar approach as the one of figure 4 may be applied in this case, with the difference that the UE context 508 of the second UE 502 is stored in the second RAN node 504 (rather than the AMF 507). When the second UE 502 resumes its RRC connection (when having arrived in the service area 505 of the first RAN node 501), the first RAN node 503 retrieves the UE context 508 from the last serving RAN node (here the second RAN node 504) as usual according to 3GPP standard. The first RAN node 501 becomes the new serving RAN node and updates the "RAN clock status report received" with the Report ID in the (new) UE context 509 (it now stores) as it is done by the AMF 407 in the approach of figure 4.

For example, when the second UE 502 moves from the second RAN node 504 in a normal operation to the first RAN node 501 that is broadcasting Report ID = XYZ, the first RAN node 501 receives a "null" from the last serving RAN node (i.e. the second RAN node 502) in the UE context 508 for the second UE 502. The first RAN node 501 stores Report ID = XYZ as "RAN clock status report received" in the new UE context 509 for the second UE 502 since the Report ID in the (old) UE context 508 it has received differs from XYZ.

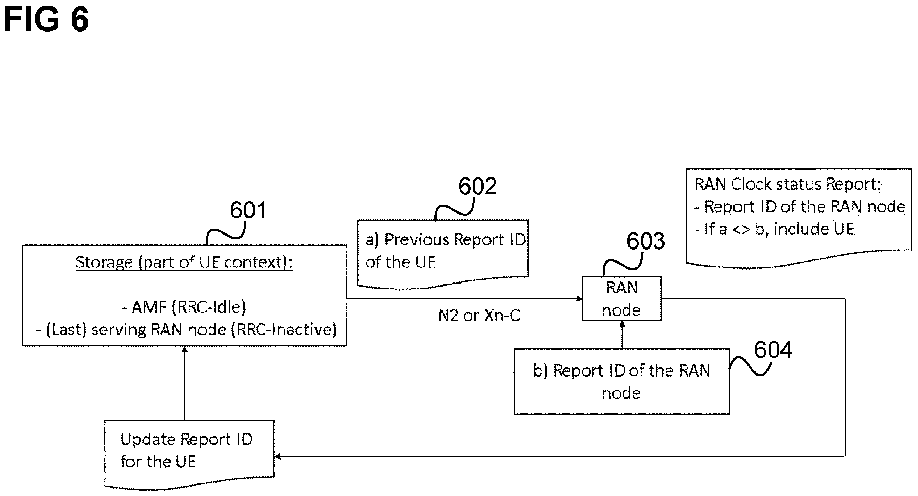

Figure 6 illustrates an information flow for the approaches of figures 4 and 5.

UE context is stored in a storage 601 (of AMF or of last/current serving RAN node) from which it (in particular the previous "RAN clock status report received" indication 602) is provided to the current serving RAN node 603. The RAN node 603 further knows the report ID 604 it broadcasts (if any). If the information of 602 and 604 differ the RAN node 603 updates the UE context in the storage 601.

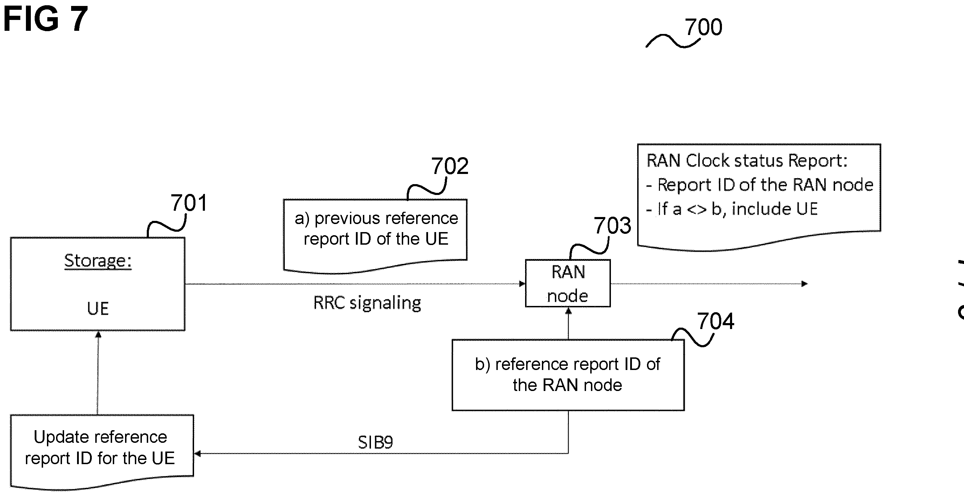

Figure 7 illustrates an information flow for an alternative approach where the UE 701 itself stores the previous "RAN clock status report received" indication. In that case, if the previous Report ID of the "RAN clock status report received" indication stored in the UE differs from the Report ID 704 the UE receives from the serving RAN node 703, the UE 701 provides the previous "RAN clock status report received" indication 702 to the current serving RAN node 703, and the UE 701 updates the Report ID of "RAN clock status report received" indication in the storage 701.

The RAN node 703 further knows the Report ID 704 it broadcasts (if any). If the information of 702 and 704 differ the RAN node 703 sends the information about UE 701 with the Report ID 704 to the AMF.

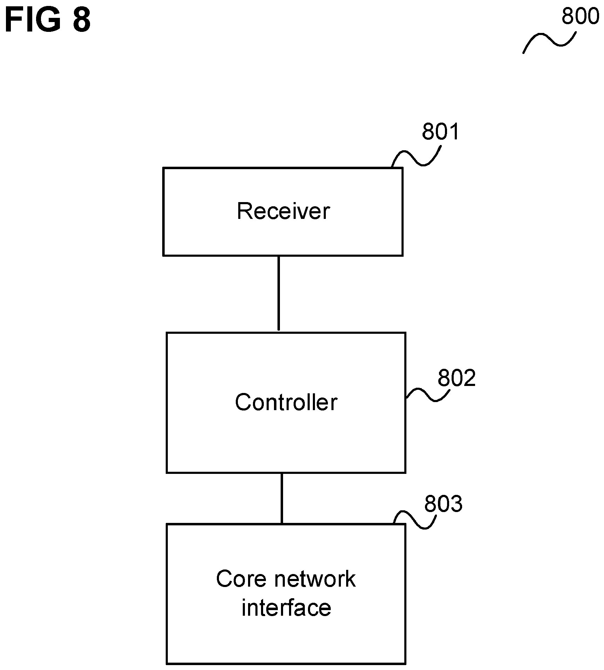

In summary, according to various embodiments, a radio access network component is provided as illustrated in figure 8.

Figure 8 shows a radio access network component 800 of a radio access network of a communication system according to an embodiment.

The radio access network component 800 includes a receiver 801 configured to receive an information from another component of the communication system, wherein the information indicates whether a notification about clock quality information has been sent to a mobile terminal and, if a notification about the clock quality information has been sent to the mobile terminal, an identification of the notification about clock quality information that was sent to the mobile terminal.

The radio access network component 800 further includes a controller 802 configured to determine whether the information indicates that a notification about the same clock quality information as a notification sent by the radio access network component (e.g. that a notification having the same identification as a notification sent by the radio access network component, e.g. the same report ID as the one sent by the radio access network component) was sent to the mobile terminal.

Further, the radio access network component 800 includes a core network interface 803 configured to, if the information does not indicate that a notification about the same clock quality information as a notification sent by the radio access network component was sent to the mobile terminal, notify a core network component of the communication system that a notification about clock quality information has been sent to the mobile terminal (e.g. notify that the radio access network component has sent a notification about clock quality information to the mobile terminal).

According to various embodiments, in other words, a radio access network (RAN) component (e.g. a RAN node like a gNodeB (gNB)) is informed about which clock quality information a mobile terminal has already been notified about and only reports the mobile terminal as being (newly) notified about current (i.e. up to date) clock quality information of the RAN component if the mobile terminal has not been notified about the clock quality information earlier (i.e. before a current notification (e.g. broadcast) of a notification about the clock quality information by the RAN component). This information may be part (and stored as part of) the mobile terminal context. Without this information the RAN component would need to report any reconnecting mobile terminal to the core network and this would cause excessive signalling between the RAN component and the core network (e.g. AMF).

According to various embodiments, the core network interface 803 is configured to, if the information indicates that a notification about the same clock quality information as a notification sent by the radio access network component was sent to the mobile terminal, to not notify (i.e. refrain from notifying) the core network component of the communication system that a notification about clock quality information has been sent to the mobile terminal (e.g. from a current notification process or operation, e.g. to leave the mobile terminal out of a list, which the core network interface transmits to the core network component, of mobile terminals to which a notification about clock quality information has been sent, i.e. omit the mobile terminal from a set of mobile terminals for which the core network component of the communication system is notified that a notification about clock quality information has been sent to them).

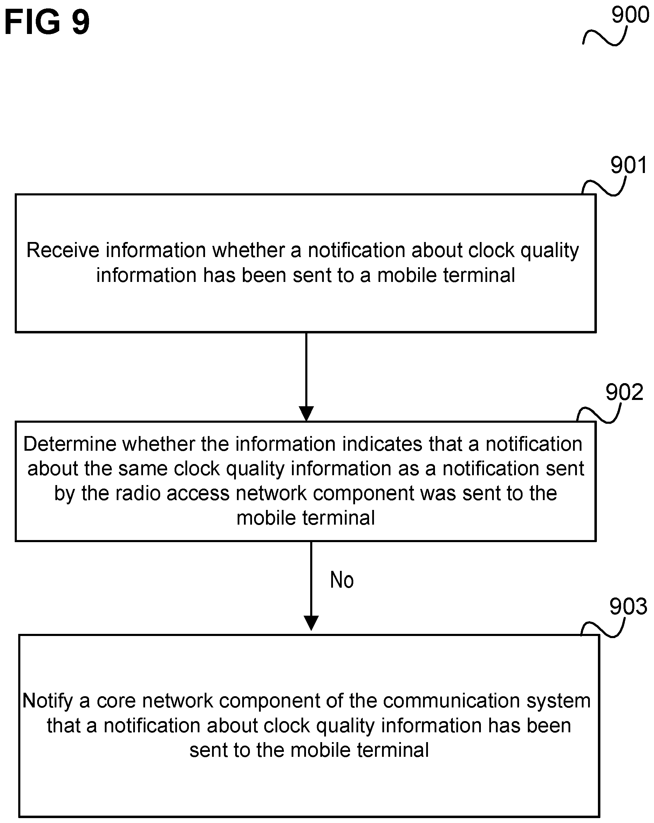

The radio access network component for example carries out a method as illustrated in figure 9.

Figure 9 shows a flow diagram 900 illustrating a method for notifying a core network of a communication system about mobile terminals notified about clock quality information according to an embodiment.

In 901, the radio access network component receives an information from another component of the communication system, wherein the information indicates whether a notification about clock quality information has been sent to a mobile terminal and, if a notification about the clock quality information has been sent to the mobile terminal, an identification of the notification about clock quality information that was sent to the mobile terminal.

In 902, it is determined whether the information indicates that a notification about the same clock quality information as a notification sent by the radio access network component was sent to the mobile terminal.

In 903, if the information does not indicate that a notification about the same clock quality information as a notification sent by the radio access network component was sent to the mobile terminal, a core network component of the communication system is notified about that a notification about clock quality information has been sent to the mobile terminal (e.g. about that the radio access network component has sent a notification about clock quality information to the mobile terminal).

The components of the radio access network component (e.g. the receiver, the controller and the core network interface) may for example be implemented by one or more circuits.

A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

## Claims

1. A radio access network component of a radio access network of a communication system, including:
A receiver configured to receive an information from another component of the communication system, wherein the information indicates whether a notification about clock quality information has been sent to a mobile terminal and, if a notification about the clock quality information has been sent to the mobile terminal, an identification of the notification about clock quality information that was sent to the mobile terminal;
A controller configured to determine whether the information indicates that a notification about the same clock quality information as a notification sent by the radio access network component was sent to the mobile terminal; and
A core network interface configured to, if the information does not indicate that a notification about the same clock quality information as a notification sent by the radio access network component was sent to the mobile terminal, notify a core network component of the communication system that a notification about clock quality information has been sent to the mobile terminal.

2. The radio access network component of claim 1, including a sender configured to send clock quality information notifications to mobile terminals served by the radio access network component, wherein the notification sent by the radio access network component is a notification sent by the sender.

3. The radio access network component of claim 1 or 2, wherein the sender is configured to broadcast clock quality information notifications to mobile terminals served by the radio access network component.

4. The radio access network component of any one of claims 1 to 3, wherein the notification about clock quality information is a notification that clock quality information is ready to be retrieved from the radio access network by the mobile terminal.

5. The radio access network component of any one of claims 1 to 4, wherein the controller is configured to determine whether the information indicates that a notification with the same identification as a notification sent by the radio access network component was sent to the mobile terminal and the core network interface is configured to, if the information does not indicate that a notification with the same identification as a notification sent by the radio access network component was sent to the mobile terminal, notify the core network component of the communication system that a notification about clock quality information has been sent to the mobile terminal.

6. The radio access network component of any one of claims 1 to 5, wherein the core network interface is configured to, if the information does not indicate that a notification with the same identification as a notification sent by the radio access network component was sent to the mobile terminal, notify the core network component about the identification of the notification sent by the radio access network component to the mobile terminal.

7. The radio access network component of any one of claims 1 to 6, wherein the core network interface is configured to notify the core network component that a notification about clock quality information was sent to the mobile terminal by including the mobile terminal into a list, which the core network interface transmits to the core network component, of mobile terminals to which a notification about clock quality information has been sent.

8. The radio access network component of any one of claims 1 to 7, wherein the clock quality information is information that a clock of the radio access network component has a clock defect.

9. The radio access network component of any one of claims 1 to 8, wherein the receiver is configured to receive the information as part of information about the mobile terminal upon connection of the mobile terminal to the radio access network component or during an ongoing connection of the mobile terminal to the radio access network component.

10. The radio access network component of any one of claims 1 to 9, wherein the receiver is configured to receive the information as part of a mobile terminal context.

11. The radio access network component of any one of claims 1 to 10, wherein the mobile terminal is a mobile terminal served or to be served by the radio access network component.

12. The radio access network component of any one of claims 1 to 11, wherein the other component is the core network component.

13. The radio access network component of any one of claims 1 to 10, wherein the mobile terminal is a mobile terminal served or to be served by the radio access network component and wherein the other component is another radio access network component of the radio access network which has served the mobile terminal before the component starts or has started to serve the mobile terminal.

14. The radio access network component of any one of claims 1 to 13, wherein the core network component is an Access and Mobility Management Function.

15. A method for notifying a core network of a communication system about mobile terminals notified about clock quality information, including:
Receiving, by a radio access component of the communication system, an information from another component of the communication system, wherein the information indicates whether a notification about clock quality information has been sent to a mobile terminal and, if a notification about the clock quality information has been sent to the mobile terminal, an identification of the notification about clock quality information that was sent to the mobile terminal;
Determining whether the information indicates that a notification about the same clock quality information as a notification sent by the radio access network component was sent to the mobile terminal; and
if the information does not indicate that a notification about the same clock quality information as a notification sent by the radio access network component was sent to the mobile terminal, notifying a core network component of the communication system that a notification about clock quality information has been sent to the mobile terminal.
